Europäisches Patentamt

(19) European Patent Office

Office européen des brevets

(11) Numéro de publication: **0 115 462**
**B1**

(12) **FASCICULE DE BREVET EUROPEEN**

(45) Date de publication du fascicule du brevet:
24.08.88

(21) Numéro de dépôt: **84400166.9**

(22) Date de dépôt: **25.01.84**

(51) Int. Cl.⁴: **G 06 K 9/80**

(54) Procédé de reconnaissance automatique d'une image, à partir d'une image correspondante de référence.

(30) Priorité: **31.01.83 FR 8301447**

(43) Date de publication de la demande:
**08.08.84 Bulletin 84/32**

(45) Mention de la délivrance du brevet:
**24.08.88 Bulletin 88/34**

(84) Etats contractants désignés:
**DE FR GB**

(56) Documents cités:
**US - A - 3 273 124**

**PATTERN RECOGNITION, vol. 13, no. 3, 1981, pages 191-206, Elmsford, New York, US K.IKEDA et al.:"On-line recognition of hand-written characters utilizing positional and stroke vector sequences"**
**IEEE INTERNATIONAL CONVENTION RECORD, vol. 11, partie 4, 25/28 mars 1963, pages 75-90,93, New York, US F. KUHL: "Classification and recognition of hand-printed characters"**
**PROCEEDINGS OF THE 5TH INTERNATIONAL CONFERENCE ON PATTERN RECOGNITION, vol. 1 de 2, 1-4 décembre 1980, pages 703-707, IEEE, New York, US W. DANA WASSON: " A pre-processor for handprinted character recognition"**
**THE POST OFFICE ELECTRICAL ENGINEERS**

(73) Titulaire: **COMMISSARIAT A L'ENERGIE ATOMIQUE, 31/33, rue de la Fédération, F-75015 Paris (FR)**

(72) Inventeur: **Duvin, Didier, 36, Avenue Jean Moulin, F-75014 Paris (FR)**
Inventeur: **Dupeyrat, Benoît, 5, Square Montpensier, F-91380 Chilly-Mazarin (FR)**

(74) Mandataire: **Mongrédien, André et al, c/o BREVATOME 25, rue de Ponthieu, F-75008 Paris (FR)**

(56) Documents cités: (suite)
**JOURNAL, vol. 60, no. 2, juillet 1967, pages 104-109, Londres, GB E.S. DEUTSCH: "Computer simulation of a character-recognition machine part 2-Information recoding and character recognition"**
**IBM TECHNICAL DISCLOSURE BULLETIN, vol. 11, no. 10, mars 1969, page 1331, Armonk, US M.F. LEVY: Data comparing method"**
**PROCEEDINGS OF THE NATIONAL ELECTRONICS CONFERENCE, vol. 18, 1962, pages 312-320, New York, US H. FREEMAN: "On the digital computer classification of geometric line patterns"**

## Description

La présente invention concerne un procédé de reconnaissance automatique d'une image, à partir d'une image correspondante de référence.

Elle s'applique à tous les domaines dans lesquels il est nécessaire de reconnaître une image ou un objet par exemple, en comparant cette image ou cet objet avec une image ou un objet de référence. Elle s'applique plus particulièrement à la robotique, domaine dans lequel les études s'orientent actuellement vers les robots dits «intelligents», pouvant interpréter des données issues du milieu extérieur.

On connaît, notamment d'après la revue intitulée «The Post Office Electrical Engineers Journal», volume 60, No 2, juillet 1967, pages 104 à 109, Londres, article de D.S. DEUTSCH intitulé «Computer Simulation of a Character Recognition Machine», un procédé de reconnaissance automatique d'une image, à partir d'une image correspondante de référence qui consiste, pour chacune de ces images, à obtenir, grâce à des moyens de détection optoélectroniques, des signaux analogiques dont les amplitudes dépendent respectivement des niveaux d'intensité des rayons lumineux issus de l'image. Ce procédé consiste ensuite à numériser, grâce à un convertisseur analogique-numérique, les valeurs des amplitudes des signaux analogiques, ces valeurs numérisées étant enregistrées dans une mémoire. On détermine ensuite, grâce à une unité de traitement recevant les valeurs numériques mémorisées correspondant aux amplitudes, des valeurs numériques correspondant à une ligne de contour caractéristique de l'image. Cette ligne de contour peut être par exemple déterminée en détectant des transitions d'intensités dans les rayons lumineux provenant de l'image; ces transitions sont définies par rapport à un seuil prédéterminé d'intensité.

Les valeurs numériques correspondant aux coordonnées des points de la ligne de contour sont mémorisées. Ce procédé connu consiste aussi à coder, grâce à l'unité de traitement recevant les valeurs numériques des coordonnées des points de la ligne de contour, des segments dont les extrémités sont situées sur cette ligne; ces segments permettent de la représenter, au mieux, de façon approchée. On compare ensuite un à un les segments correspondant à la ligne du contour de l'image à reconnaître, avec les segments correspondant à la ligne du contour de l'image de référence.

Diverses méthodes permettent de coder des segments successifs définissant une ligne de contour; diverses méthodes aussi existent pour comparer les segments définissant cette ligne de contour.

Parmi les méthodes utilisées pour coder des segments définissant une ligne de contour, l'une d'elles consiste à définir chaque segment par les coordonnées cartésiennes de ses extrémités, les segments présentant des orientations très variées par rapport à une direction de référence. Cette méthode connue, notamment par la revue précitée, consiste à:

– obtenir grâce à des moyens de détection optoélectroniques, des signaux analogiques dont les amplitudes dépendent respectivement des niveaux d'intensité des rayons lumineux issus de l'image, ou du contour à reconnaître,

– numériser les valeurs des amplitudes des signaux analogiques, les valeurs numériques obtenues étant enregistrées dans une mémoire,

– déterminer, grâce à une unité de traitement recevant les valeurs numériques mémorisées des amplitudes, des valeurs numériques correspondant aux coordonnées des points d'au moins une ligne de contour caractéristique de l'image dans un repère X, Y, les valeurs de ces coordonnées étant alors mémorisées,

– coder grâce à l'unité de traitement recevant les valeurs numériques des coordonnées des points de la ligne de contour des segments successifs dont les extrémités sont situées sur cette ligne, ces codes étant alors mémorisés en même temps que les valeurs numériques des coordonnées des extrémités des segments correspondants.

– à obtenir, pour chaque segment du contour à reconnaître et du contour de référence, et à partir des valeurs codées des segments et des coordonnées de leurs extrémités, un couple de valeurs caractéristiques $\rho_i$, $\theta_i$, qui correspondent respectivement, en coordonnées curvilignes, à la longueur $\rho_i$ de chaque segment et à l'angle $\theta_i$ que fait ce segment par rapport à une direction de référence.

– à comparer les couples de valeurs caractéristiques obtenues respectivement pour les segments du contour à reconnaître et du contour de référence.

Cette méthode se révèle particulièrement peu efficace dès que l'image présente des contours continus pour lesquels il est alors nécessaire d'enregistrer une grande quantité d'informations, pour des points adjacents. Cette méthode a pour principal inconvénient d'encombrer inutilement la mémoire de l'unité de traitement permettant d'analyser le contour à partir de ces segments.

Parmi les méthodes qui permettent d'effectuer une comparaison entre les segments correspondant à la ligne du contour de l'image à reconnaître, et les segments correspondant à la ligne du contour de l'image de référence, l'une d'elles consiste à utiliser les «codages développés» des segments définissant le contour à reconnaître, et des segments définissant le contour de référence. Un «codage développé» est la courbe obtenue en portant un abscisse, l'abscisse curviligne des segments, et en ordonnée, l'angle formé entre le segment considéré et l'horizontale. Cette courbe est qualifiée de «signature». La méthode connue précitée consiste alors à rechercher si la distance entre la signature du contour de référence et la signature du contour à reconnaître, est minimale. En effet, lorsque cette distance est minimale, il est possible d'affirmer que le contour à reconnaître correspond au contour de référence. En fait, la mesure de la distance entre les deux signatures consiste à mesurer l'aire séparant ces deux signatures. Cette méthode a pour principal inconvénient de nécessiter un temps de traitement trés important.

L'invention a pour but de remédier à ces inconvénients et notamment de permettre la reconnaissance automatique d'une image, à partir d'une image correspondante de référence, sans qu'il soit nécessaire d'accaparer une place importante de la mémoire d'une unité de traitement et sans qu'il soit nécessaire d'occuper cette unité de traitement pendant un temps important.

L'invention vise un procédé de reconnaissance automatique d'une image, à partir d'une image correspondante de référence, consistant pour chacune des ces images:

- à obtenir grâce à des moyens de détection opto-électroniques (C), des signaux analogiques dont les amplitudes dépendent respectivement des niveaux d'intensité des rayons lumineux issus de l'image,

- à numériser les valeurs des amplitudes des signaux analogiques, les valeurs numériques obtenues étant enregistrées dans une mémoire (M),

- à déterminer, grâce à une unité de traitement (UT) recevant les valeurs numériques mémorisées des amplitudes, des valeurs numériques aux coordonnées des points d'au moins une ligne de contour (L) caractéristique de l'image dans un repère X, Y, les valeurs de ces coordonnées étant alors mémorisées,

- à coder grâce à l'unité de traitement (UT) recevant les valeurs numériques des coordonnées des points de la ligne de contour (L), des segments successifs (Si) dont les extrémités sont situées sur cette ligne, ces codes étant alors mémorisés en même temps que les valeurs numériques des coordonnées des extrémités des segments correspondants,

- à obtenir, pour chaque segment du contour à reconnaître et du contour de référence, et à partir des valeurs codées des segments Si et des coordonnées de leurs extrémités, un couple de valeurs caractéristiques $\rho i$, $\theta i$, qui correspondent respectivement, en coordonnées curvilignes, à la longueur $\rho i$ de chaque segment et à l'angle $\theta i$ que fait ce segment par rapport à une direction de référence.

- à comparer les couples de valeurs caractéristiques obtenues respectivement pour les segments du contour à reconnaître et du contour de référence, caractérisé en ce que la comparaison consiste à rechercher, à partir de ces couples, des coïncidences entre des gros segments caractéristiques correspondants du contour de référence et du contour à reconnaître, un gros segment résultant d'un contour étant un segment qui peut s'inscrire dans un rectangle de dimensions limites $\Delta\rho_s$, $\Delta\theta_s$, un gros segment pour lequel $\Delta\rho_s$ est bien plus grand que $\Delta\theta_s$ étant dit caractéristique rectiligne du contour ($\Delta\rho_s$ est localement la plus grande longueur d'un segment, compatible avec un écart d'angle $\Delta\theta_s$) un gros segment pour lequel $\Delta\theta_s$ st bien plus grand que $\Delta\rho_s$ étant dit caractéristique

de variation d'angle du contour ($\Delta\theta_s$ est localement le plus grand écart d'angle compatible avec une longueur de segment $\Delta\rho_s$), un gros segment A du contour de référence étant en coïncidence avec un gros segment B du contour à reconnaître, pour un décalage ($\rho_0$, $\theta_0$), si en faisant coïncider l'origine du repère définissant A, avec le point ($\rho_0$, $\theta_0$) dans le repère définissant B, les propriétés suivantes sont vérifiées, en coordonnées curvilignes:

$$\rho_A - \rho_B - \rho_0 < \Delta\rho_1$$

$\Delta\rho_1$ et $\Delta\theta_1$ étant fixés.

$$\theta_A - \theta_B - \theta_0 < \Delta\theta_1$$

Selon une autre caractéristique, la recherche des coïncidences consiste en outre dans des images développées (DL1, DL2) à partir des segments respectifs des deux lignes de contours de l'image de référence et de l'image à reconnaître, dans un repère ($\rho$, $\theta$) à ramener l'image développée inconnue $DL_2$ à une longueur égale à la longueur de l'image développée de référence $DL_1$ par une homothétie sur sa développée de rapport $\frac{L_1}{L_2}$, puis, pour ces deux images ainsi centrées autour de la valeur moyenne ($\theta_0$) et présentant alors toutes deux une même longueur ($L_1$), à déterminer l'aire (A) qui sépare ces deux images, la comparaison de cette aire avec un seuil permettant d'affirmer, lorsqu'elle est inférieure à ce seuil, que l'image à reconnaître correspond à l'image de référence.

Les caractéristiques et avantages de l'invention ressortiront mieux de la description qui va suivre, donnée en référence aux dessins annexés dans lesquels:

- la Fig. 1 représente schématiquement un dispositif permettant la mise en œuvre du procédé de l'invention.

- la Fig. 2 représente schématiquement une ligne de contour d'un objet ou d'une image obtenu au cours de la mise en œuvre du procédé de l'invention, cette ligne de contour étant ensuite segmentée.

- les Fig. 3 et 4 permettent de mieux comprendre la segmentation d'une ligne de contour selon un code dit de Freeman.

- la Fig. 5 représente schématiquement une ligne de contour segmentée, dans un repère cartésien X, Y. Cette figure permet de mieux comprendre la représentation de cette ligne de contour en coordonnées polaires curvilignes.

- la Fig. 6 représente schématiquement une ligne de contour dans un repère cartésien X, Y et l'image développée de cette ligne de contour en coordonnées polaires curvilignes, dans un repère ($\rho$, $\theta$).

- la Fig. 7 représente un exemple d'une ligne de contour hexagonale dans un repère cartésien X, Y et l'image développée de cette ligne de contour en coordonnées polaires curvilignes dans un repère ($\rho$, $\theta$).

- la Fig. 8 représente une image développée d'une ligne de contour qui permet de mieux comprendre l'un des modes de mise en œuvre du procédé de l'invention, dans lequel on utilise un principe dit des «gros segments».

– la Fig. 9 représente schématiquement une ligne de contour dans un repère cartésien X, Y qui permet de mieux comprendre la méthode des «gros segments».

– les Fig. 10, 11 et 12 permettent de mieux comprendre certaines définitions concernant l'image développée d'une ligne de contour segmentée.

– la Fig. 13 permet de mieux comprendre un autre mode de mise en œuvre du procédé de l'invention, dans lequel on utilise l'aire séparant les images développées correspondant respectivement aux lignes du contour de référence et du contour à reconnaître.

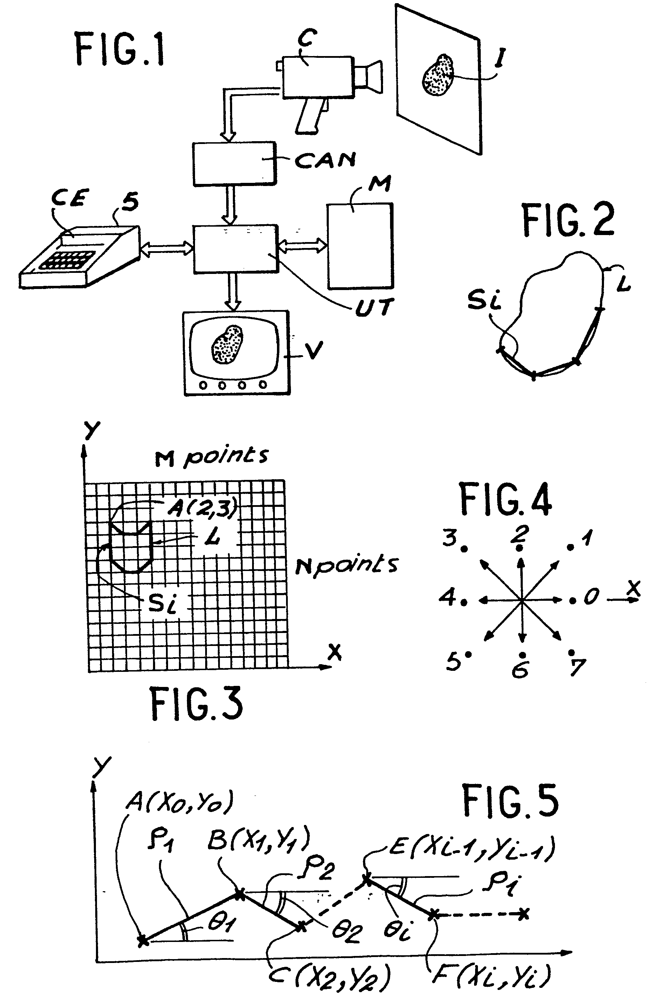

La figure 1 représente schématiquement un dispositif permettant la mise en œuvre du procédé de l'invention. Ce dispositif comprend des moyens de détection opto-électronique C constitués par exemple par une caméra vidéo. Ces moyens de détection fournissent des signaux analogiques dont les amplitudes dépendent respectivement des niveaux d'intensités des rayons lumineux issus d'une image ou d'un objet I à reconnaître et d'une image ou d'un objet de référence. Le dispositif de l'invention permet de comparer ces deux images. Les moyens opto-électroniques C sont reliés à une unité de traitement UT, par exemple par l'intermédiaire d'un convertisseur analogique-numérique CAN.

Cette unité de traitement est elle-même reliée à une mémoire M ainsi qu'à un appareil de visualisation V permettant par exemple de surveiller le fonctionnement du dispositif; une console CE d'entrée d'informations ou de données est reliée à l'unité de traitement UT. Le convertisseur analogique-numérique CAN permet de transformer les valeurs des amplitudes des signaux analogiques fournis par les moyens opto-électroniques C, en valeurs numériques; ces valeurs sont alors enregistrées dans la mémoire M.

Le procédé de l'invention consiste, après cette numérisation des signaux fournis par les moyens opto-électroniques C, pour l'objet ou l'image à reconnaître et pour l'objet ou l'image de référence, à déterminer grâce à l'unité de traitement 2, des valeurs numériques correspondant à des coordonnées de points d'une ligne de contour caractéristique de l'image de l'objet de référence, et correspondant à des coordonnées des points de cette ligne de contour pour l'image ou l'objet à reconnaître. Ces valeurs numériques sont enregistrées dans la mémoire M de l'unité de traitement.

C'est ainsi par exemple, que si l'image à reconnaître est une surface I de couleur sombre sur un fond clair, et que l'image de référence est elle-même une surface de même forme et de même dimension, de couleur sombre sur fond clair, l'unité de traitement UT permet l'enregistrement dans la mémoire M, de valeurs numériques correspondant respectivement aux coordonnées des points d'une ligne de contour L pour l'image de référence et aux coordonnées de points d'une ligne de contour de même forme et de même dimension pour l'image à reconnaître. La ligne de contour L est représentée sur la figure 2.

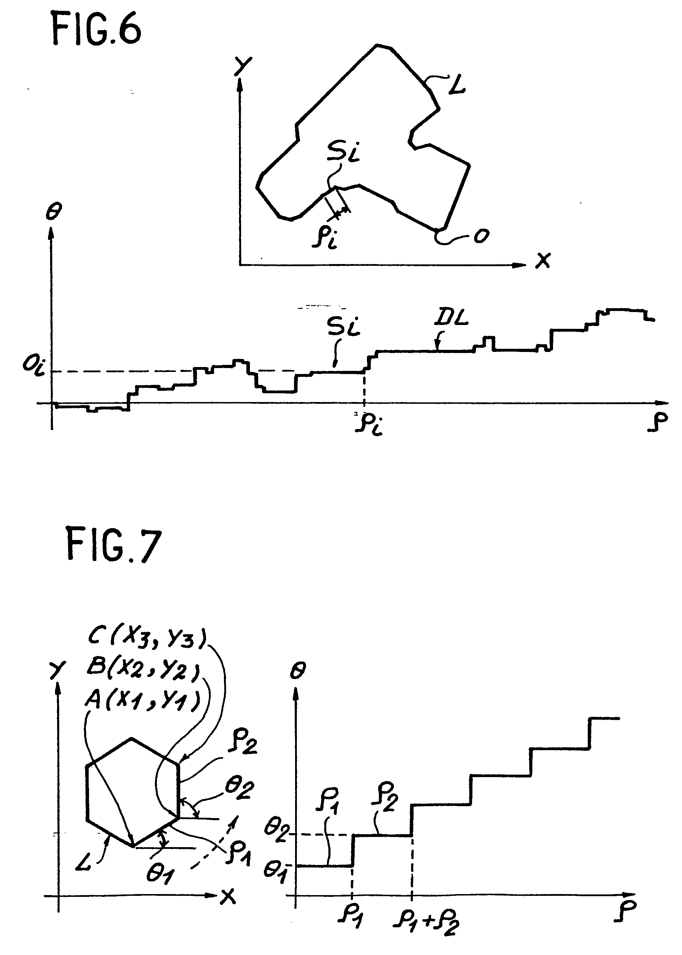

De préférence, selon le procédé de l'invention, les segments sont codés selon une méthode dite de «codage» par vecteurs de Freeman. Cette méthode de codage sera mieux comprise à l'aide des figures 3 et 4. On suppose que le contour L de l'image à reconnaître ou de l'image de référence, représenté sur la figure 3, est numérisé spatialement dans une matrice présentant M × N point dans un repère de référence X, Y. La méthode de codage de Freeman consiste à coder des déplacements élémentaires que l'on effectue en suivant la ligne de contour segmentée L. Dans la représentation matricielle choisie où la matrice est carrée (M = N), il n'y a que huit possibilités d'orientation pour passer d'un point à un autre contour. Ces huits possibilités sont représentées par les huit vecteurs dits vecteurs de Freeman numérotés de 0 à 7 sur la figure 4. Ces huit vecteurs sont en fait décalés de $\frac{\pi}{4}$ dans l'exemple de représentation matricielle considéré. Les vecteurs de Freeman permettent ainsi de définir des segments orientés codés successifs, dont les extrémités sont situées au voisinage de chaque ligne de contour. Les coordonnées de ces extrémités sont bien entendu connues à partir des coordonnées des points de chaque ligne de contour.

Dans l'exemple de contour segmenté L représenté sur la figure 3, si le point de départ pour le parcours de ce contour est le point A, de coordonnées 2, 3 dans la matrice choisie, la chaîne de Freeman associée au contour L, peut être exprimée, en fonction des numéros de vecteurs de la figure 4, de la façon suivante:

7, 0, 1, 6, 6, 6, 5, 4, 3, 2, 2, 2.

Ce codage est particulièrement intéressant car il fait apparaître l'orientation des segments de la ligne de contour par rapport à la direction de référence X.

L'opération suivante va consister à définir des segments codés Si dont les extrémités sont situées sur chaque ligne de contour, de façon à approcher au mieux chaque ligne de contour, par une ligne de contour segmentée.

On va alors comparer les segments codés correspondant à la ligne du contour de l'image à reconnaître, avec les segments codés correspondant à la ligne de contour de l'image de référence. Cette comparaison consiste tout d'abord, pour chacune des lignes de contour de l'image de référence et de l'image à reconnaître, à obtenir pour chaque segment, à partir des valeurs numériques correspondant aux extrémités de ces segments un couple de valeurs caractéristiques correspondant respectivement à l'angle $\theta_i$ que fait ce segment par rapport à la direction de référence X, ainsi qu'à la longueur $\rho_i$ de ce segment. Ceci revient en fait à réaliser un codage polaire curviligne de chaque segment: on enregistre l'abscisse curviligne de chaque extrémité de segment ainsi que l'orientation correspondante de ce segment. Sur la figure 5, en coordonnées cartésiennes, les coordonnées des points A, B, C . . . F, sont respectivement $(X_0, Y_0)$, $(X_1, Y_1)$, $(X_2, Y_2)$ . . . $(X_i, Y_i)$. Le segment AB par exemple est défini par les coordonnées de ses extrémités. En coordonnées polaires curvilignes, chaque segment est défini par l'abscisse curviligne de son extrémité et par son orientation: $\rho_1$, $\theta_1$ par exemple pour le segment AB, si A est le point de départ du contour. Le segment BC est défini par son abscisse curviligne $\rho_1$, sa longueur $\rho_2$ et son orientation $\theta_2$. Le codage polaire curviligne qui vient d'être décrit, présente les propriétés suivantes:

— une translation de la ligne de contour segmentée, est invariante.

— Une rotation se traduit par une «composante continue» sur l'ensemble des segments codés: l'orientation de chaque segment est augmentée de la valeur de l'angle de rotation.

La comparaison des segments consiste alors à rechercher s'il existe un ensemble de coïncidences, respectivement entre les couples de valeurs caractéristiques $(\rho_i, \theta_i)$ correspondant à la ligne du contour de l'image à reconnaître, et les couples de valeurs caractéristiques correspondant à la ligne du contour de l'image de référence.

Cette recherche d'ensemble de coïncidences va maintenant être décrite de manière plus détaillée, à l'aide de la figure 6. Elle consiste à détecter un ensemble de coïncidences entre les couples de valeurs caractéristiques correspondant à la ligne du contour de l'image à reconnaître et les couples de valeurs caractéristiques correspondant à la ligne du contour de l'image de référence à partir des images développées de ces deux lignes, dans un repère cartésien, $\rho$, $\theta$. Dans ce repère, on porte en abscisses, les abscisses curvilignes $\rho_i$ des segments Si du contour de référence ou du contour à reconnaître. On porte en ordonnées les angles $\theta_i$ que forment respectivement les segments du contour à reconnaître ou du contour de référence, avec la direction de référence X définie plus haut. L'image développée d'une ligne de contour L dans le repère X, Y, est représentée par DL dans le repère $\rho$, $\theta$.

La figure 7 permet de mieux comprendre l'obtention d'ume image développée en coordonnées polaires curvilignes. Sur cette figure, on a représenté dans un repère cartésien X,Y, un hexagone dont les sommets sont représentés en A, B, C, . . . Ces sommets ont respectivement pour coordonnées $(X_1, Y_1)$, $(X_2, Y_2)$, $(X_3, Y_3)$. Les segments AB, PC ont respectivement pour longueurs $\rho_1$, $\rho_2$ . . . Les angles que font ces segments par rapport à la direction de référence X sont respectivement $\theta_1$, $\theta_2$ . . . On suppose sur cette figure que dans la représentation en coordonnées polaires curvilignes $\rho$, $\theta$, l'hexagone L est parcouru à partir du point A, dans le sens AB. Dans le repère $\rho$, $\theta$, l'image développée de l'hexagone est une succession de «marches d'escalier»; la première marche est parallèle à l'axe $\rho$ et a pour ordonnées $\theta_1$. Sa longueur est celle du segment AB et correspond donc à l'abscisse curviligne de l'extrémité B de segment, c'est-à-dire $\rho_1$. Ensuite, on trouve un segment vertical parallèle à l'axe $\theta$ et dont l'ordonnée est $\theta_2$. De la même manière, la deuxième marche correspond au segment BC; elle est parallèle à l'axe $\rho$ et a pour longueur $\rho_2$, son abscisse curviligne étant $\rho_1 + \rho_2$.

Pour rechercher les coïncidences entre la ligne de contour de l'image de référence et la ligne de contour de l'image à reconnaître, on va donc représenter les images développées de ces lignes, dans un repère $\rho$, $\theta$ de manière à rechercher ces coïncidences, à partir de la superposition de ces deux images développées.

La mise en œuvre du procédé de l'invention, on va tout d'abord rechercher s'il est possible de simplifier les images développées de la ligne de contour de référence et de la ligne de contour de l'image à reconnaître.

On va en fait rechercher s'il existe un groupe élémentaire d'images développées correspondant à un groupe de segments, qui peut être réduit à une seule image développée résultante, correspondant à un seul segment résultant, celui-ci continuant à définir au mieux une portion de la ligne de contour considérée. Ce segment résultant devra bien entendu, comme on le verra plus loin en détail, rester dans une tolérance angulaire prédéterminée par rapport à l'angle que fait le premier segment du groupe considéré, vis-à-vis de la direction de référence. la recherche des coïncidences sera alors effectuée sur des images développées dans lesquelles on aura recherché des images développées résultantes.

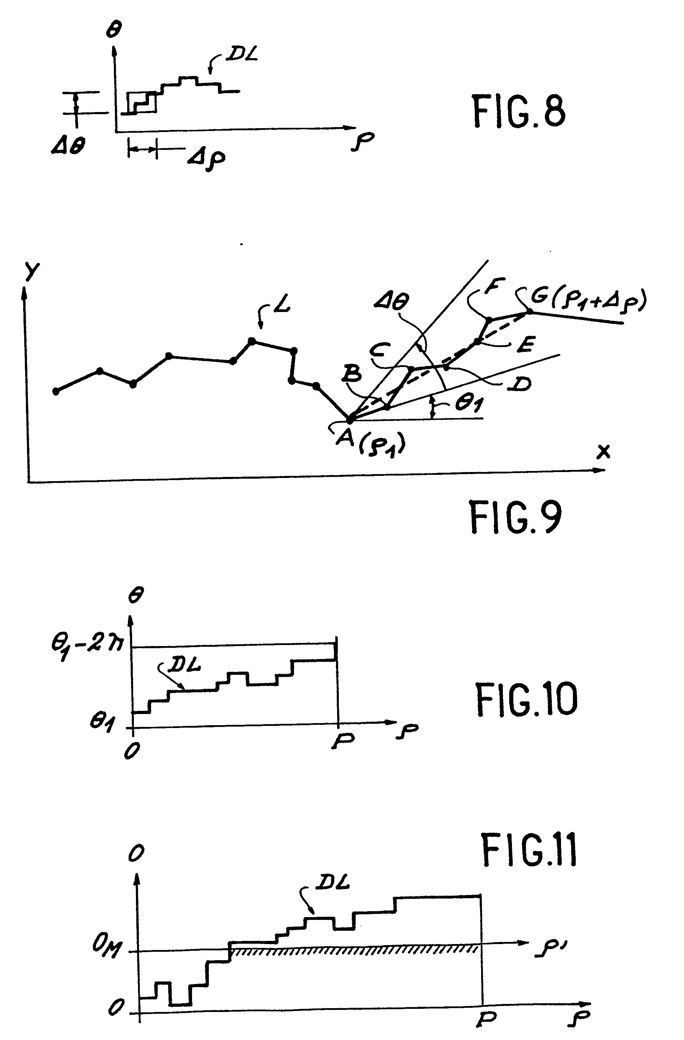

Les figures 8 et 9 vont permettre de mieux comprendre ce mode de mise en œuvre du procédé de l'invention. La figure 8 représente une image développée d'un contour en coordonnées polaires curvilignes, dans un repère $\rho$, $\theta$. Si l'image développée DL représentée sur cette figure correspond par exemple à la développée de la ligne du contour de l'image de référence, il existe bien entendu une image développée, non représentée ici, pour la ligne du contour de l'image à reconnaître, qu'il faudra comparer à l'image développée de référence représentée sur cette figure. On appele «gros segment» ou «segment résultant» d'une ligne de contour toute succession de segments dont le codage développé s'inscrit dans un rectangle de dimension $\Delta\rho$, $\Delta\theta$, tel que représenté sur la figure 8.

Si $\Delta\rho$ est bien plus grand que $\Delta\theta$, le segment résultant, dans un repère cartésien X, Y, peut être qualifié de «caractéristique rectiligne de longueur $\Delta\rho$».

Si $\Delta\rho$ est bien plus petit que $\Delta\theta$, le segment résultant dans le repère cartésien X, Y, peut être qualifié de «caractéristique d'angle $\Delta\theta$».

Pratiquement, telle que représenté sur la figure 9, une caractéristique rectiligne signifie, sur la ligne de contour L, dans un repère cartésien X, Y, que le groupe de segments AB, BC, CD, DE, FG; peut être approché par un segment unique AG, si tous les segments sont compris dans un angle $\Delta\theta$ par rapport à l'angle $\theta_1$ que fait le premier segment AB de ce groupe par rapport à la direction de référence X. Dans l'image développée de la figure 8, ce groupe de segments est contenu dans le

rectangle de dimension $\Delta\rho$, $\Delta\theta$ (le point G ayant pour abscisse curviligne, la valeur $\rho_1 + \Delta\rho$).

Si tous les segments du groupe présentent donc des directions qui restent dans une tolérance angulaire $\Delta\theta$ prédéterminée par rapport à la direction $\theta_1$ du premier segment, on peut donc approcher ces segments par un segment unique AG, ce qui se traduit dans l'image développée de la figure 8, par le remplacement des images développées de ces segments, contenues dans le rectangle $\Delta\rho$, $\Delta\theta$, par une image développée unique représentée par une seule marche d'escalier de longueur $\Delta\rho$. On recherche alors s'il est possible d'effectuer la même simplification pour d'autres portions de la ligne de contour considérée.

L'algorithme d'extraction de caractéristiques consiste à calculer pour chaque origine de segment:
- la plus grande longueur $\Delta\rho_s$ compatible avec un écart d'angle imposé $\Delta\theta_0$,
- le plus grand écart d'angle $\Delta\theta_s$ compatible avec la longueur imposé $\Delta\rho_0$.

L'algorithme classe ensuite les gros segments caractéristiques dans deux tableaux avec leurs coordonnées curvilignes:
- caractéristiques rectilignes: $\Delta\rho_i$, $\rho_i$, $\theta_i$ par ordre décroissant des valeurs $\Delta\rho_i$,
- caractéristiques d'angle: $\Delta\theta_j$, $\rho_j$, $\theta_j$ par ordre décroissant des valeurs $\Delta\theta_j$,

Le classement s'arrête dès que la caractéristique devient non significative (dès qu'elle tombe en dessous de la plus grande caractéristique divisée par un nombre entier prédéterminé, 3 par exemple).

Selon ce premier mode de mise en œuvre du procédé de l'invention, on va donc rechercher les coïncidences entre les caractéristiques extraites pour la ligne du contour de référence et pour la ligne du contour à reconnaître, par simple superposition de ces deux caractéristiques extraites:

On fait apparaître des similitudes dans les caractéristiques globales qui ont été extraites: les gros segments.

Deux gros segments ou segments résultants sont dits compatibles à $(\rho_\ell, \theta_\ell)$ près si:
- leurs longueurs sont égales à $\rho_\ell$ près
- leurs largeurs sont égales à $\theta_\ell$ près.

Un gros segment A ($\rho_A$, $\theta_A$, $\Delta\rho_A$, $\Delta\theta_A$) est dit en coïncidence avec un gros segment B ($\rho_B$, $\theta_B$, $\Delta\rho_B$, $\Delta\theta_B$) pour un décalage ($\rho_0$, $\theta_0$), si en faisant coïncider l'origine du repère développé définissant A, avec le point ($\rho_0$, $\theta_0$) dans le repère développé définissant B, on vérifie les propriétés suivantes:
- les abscisses curvilignes des gros segments A et B présentent entre elles un écart inférieur à un seuil $\Delta\rho$ donné:

$$\rho_A - \rho_B - \rho_0 < \Delta\rho_\ell$$

- les angles correspondants aux ordonnées des gros segments A et B présentent entre eux un écart inférieur à un seuil $\Delta\theta_\ell$ donné:

$$\theta_A - \theta_B - \theta_0 < \Delta\theta_\ell,$$

les dimensions des gros segments sont compatibles à $(\rho_\ell, \theta_\ell)$ près.

En fait, la coïncidence des deux gros segments caractéristiques signifie que l'on trouve dans deux images correspondantes, deux lignes caractéristiques «se ressemblant», situées à la même abscisse curviligne et présentant une orientation identique (aux écarts de tolérance près). L'algorithme de reconnaissance basé sur le principe des coïncidences consiste donc à essayer de faire coïncider un gros segment caractéristique de l'image à reconnaître avec un gros segment caractéristique d'une image de référence. Si ces gros segments satisfont aux critères de ressemblance, alors on calcule le vecteur de décalage ($\rho_0$, $\theta_0$), puis on recherche si les autres gros segments de l'image à reconnaître coïncident avec les gros segments de l'image de référence.

Le nombre de coïncidences repérées constitue le critère de reconnaissance. On considère que l'image à reconnaître correspond à l'image de référence en fonction de la valeur du nombre de coïncidences détectées.

Dans la pratique, cet algorithme est très rapide, car le nombre de gros segments est, en général, limité.

Un deuxième mode de mise en œuvre du procédé de l'invention consiste à combiner le premier mode de mise en œuvre décrit plus haut, avec un procédé connu de mesure de distance. Ce procédé connu consiste dans les images développées des deux lignes des contours de l'image de référence et de l'image à reconnaître, dans le repère $\rho$, $\theta$, à calculer les valeurs angulaires moyennes $\theta_{m1}$ et $\theta_{m2}$ correspondant respectivement aux moyennes angulaires des segments de ces lignes. On centre ensuite ces valeurs moyennes sur une valeur commune $\theta_0$ dans les deux images développées des deux lignes. On va ensuite rechercher par homothétie de rapport constant à obtenir dans les images développées des deux lignes de contours, des sommes égales de longueurs de segments. Ces deux images ayant ainsi été traitées, on va déterminer l'aire qui sépare ces deux images, développées cette aire étant représentative de la ressemblance de ces deux images développées. La comparaison de cette aire avec une aire limite ou seuil, permet d'affirmer lorsque l'aire représentative est inférieure à ce seuil, que l'image à reconnaître correspond à l'image de référence.

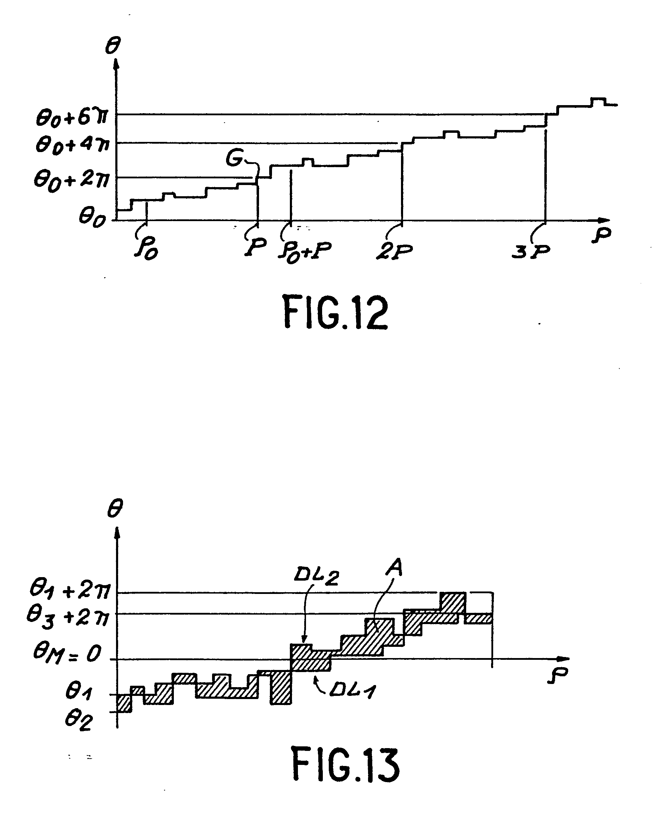

Les figures 10 et 11 vont permettre de mieux comprendre ce type connu de recherche de coïncidences de l'invention.

La figure 10 représente l'image développée DL de l'une des lignes des contours de référence ou à reconnaître. Cette image développée dans le repère $\rho$, $\theta$, peut être qualifiée de «signature» de la ligne de contour. La signature d'un contour fermé et segmenté est en fait son image développée. Dans cette image développée, l'abscisse curviligne est limitée entre 0 et le périmètre P du contour. Ce périmètre peut être appelé «longueur de la signature» ou longueur de l'image développée. Cette longueur s'étend entre 0 et P sur la figure. La représentation d'un contour segmenté par son image développée est bi-univoque. Dans l'exemple représenté, le segment considéré au départ sur la ligne de contour fait un angle $\theta_1$ par rapport à la direction de référence X, dans un repère cartésien X, Y. Le contour considéré étant supposé fermé, la signature s'étend sur $2\pi$ sur l'axe $\theta$.

La signature ou «image développée normalisée» dans le repère $\rho$, $\theta$ est celle qui présente une valeur moyenne d'angle nul dans ce repère. On normalise une image développée ou signature, en calculant la valeur moyenne $\theta_m$ de son angle, sur la totalité de sa longueur ou périmètre (valeur moyenne des angles $\theta$ que font les segments Si par rapport à la direction de référence X, dans le repère X, Y.

L'image développée normalisée ou «signature normalisée» est représentée sur la figure 11. Sur cette figure, la signature ou image développée normalisée peut être maintenant considérée dans le repère $(\rho', \theta)$. En fait, cette normalisation consiste à calculer la valeur moyenne $\theta_m$ des angles $\theta_i$ que font, dans la ligne de contour segmentée, les différents segments, par rapport à la direction de référence. Le repère $(\rho, \theta)$ est en fait un repère translaté du repère $(\rho', \theta)$ d'une valeur $\theta_m$. Dans cet autre mode de mise en œuvre du procédé de l'invention, on cherche donc les valeurs moyennes $\theta_m$ pour les images développées ou signatures du contour de référence et du contour à reconnaître.

Dans ce mode de mise en œuvre du procédé de l'invention, on évalue la ressemblance entre les images développées ou signatures des lignes du contour de référence et du contour à reconnaître. La première opération que l'on a réalisée dans ce mode de mise en œuvre, a été de rechercher la valeur moyenne $\theta_m$ des angles pour les segments de chacun de ces contours, de manière à pouvoir centrer les signatures sur une même valeur $\theta_0$, qui peut d'ailleurs être la valeur $\theta_0 = 0$. On ne peut évaluer la ressemblance que si les deux images développées ou signatures sont normalisées ($\theta_m$ centré sur $\theta_0$ pour les deux images développées) et que si les deux images développées ou signatures, ont la même longueur ou périmètre P.

Sur la figure 13, on a représenté dans le repère $\rho$, $\theta$, les images développées ou signatures $DL_1$, $DL_2$, correspondant respectivement aux lignes de contour d'une image de référence et d'une image à reconnaître, non représentées sur cette figure. Ces deux signatures sont ici normalisées (centrées sur la valeur moyenne $\theta_m = 0$) et présentent la même longueur ou périmètre. Les longueurs ou périmètres étant égaux dans les deux images développées, ceci correspond en fait dans les deux lignes de contour segmentées, à obtenir des sommes de longueur de segments égales pour ces deux lignes.

La distance entre les deux images développées ou signatures $DL_1$ et $DL_2$ normalisées et présentant la même longueur, est équivalente à la somme, en valeur absolue, des aires délimitées par les segments représentatifs de ces signatures. Cette somme est en fait l'aire hachurée A sur la figure. Cette aire est représentative de la ressemblance entre les deux images développées ou signatures; elle est donc représentative de la ressemblance entre les lignes segmentées des contours de l'image de référence et de l'image à reconnaître. On peut fixer une aire limite ou seuil, telle que lorsque l'aire A qui sépare les deux images développées ou signatures, est inférieure à ce seuil, il soit possible de conclure que l'image à reconnaître correspond à l'image de référence.

Dans le deuxième mode de mise en œuvre du procédé de l'invention, il est possible de combiner le procédé connu de comparaison des signatures, qui vient d'être décrit, avec le premier mode de mise en œuvre, dans lequel interviennent les caractéristiques rectilignes et les caractéristiques d'angles des gros segments. On combine alors les avantages du premier mode de mise en œuvre du procédé de l'invention avec ceux du procédé connu:

– la grande rapidité du tri des caractéristiques rectilignes et des caractéristiques d'angles,

– la grande précision de la méthode de corrélation sur les signatures.

Dans ce deuxième mode de mise en œuvre de l'invention, l'algorithme est le suivant:

On calcule le nombre de coïncidences entre les gros segments de l'image ou du contour à reconnaître et de l'image ou du contour de référence. On constitue donc un tableau des coïncidences décrites plus haut.

Dans chaque colonne apparaît le nombre de coïncidences relevées, appelées notes de coïncidences.

A la fin de ce traitement, on effectue la mesure de ressemblance des signatures définie précédemment pour l'image de référence ayant eu le plus grand nombre de coïncidences avec l'image à reconnaître; l'abscisse prise comme origine sur l'image ou contour à reconnaître, est l'abscisse du premier gros segment; l'abscisse prise comme origine sur l'image ou contour de référence est celle du gros segment correspondant. On n'effectue cette mesure de ressemblance que pour un petit nombre de décalages (par exemple plus ou moins le vingtième du périmétre) de l'image ou du contour.

Si, à l'issue de ce calcul, la distance minimale trouvée est trop importante, on prend dans le tableau de caractéristiques la «note» immédiatement inférieure si elle reste néanmoins acceptable (supérieure à une valeur minimum) et l'on recommence la mesure de ressemblance avec la nouvelle image de référence.

**Revendications**

1. Procédé de reconnaissance automatique d'une image (I) à partir d'une image correspondance de référence, consistant pour chacune de ces images:

– à obtenir, grâce à des moyens de détection opto-électroniques (C), des signaux analogiques dont les amplitudes dépendent respectivement des niveaux d'intensité des rayons lumineux issus de l'image,

– à numériser les valeurs des amplitudes des signaux analogiques, les valeurs numériques obtenues étant enregistrées dans une mémoire (M),

– à déterminer, grâce à une unité de traitement (UT) recevant les valeurs numériques mémorisées des amplitudes, des valeurs numériques correspondant aux coordonnées des points d'au moins une ligne de contour (L) caractéristique de l'image, dans un repère X, Y, les valeurs de ces coordonnées étant alors mémorisées,

– à coder grâce à l'unité de traitement (UT) recevant les valeurs numériques des coordonnées des points de la ligne de contour (L), des segments successifs (Si) dont les extrémités sont situées sur cette ligne, ces codes étant alors mémorisés en même temps que les valeurs numériques des coordonnées des extrémités des segments correspondants,

– à obtenir, pour chaque segment du contour à reconnaître et du contour de référence, et à partir des valeurs codées des segments Si et des coordonnées de leurs extrémités, un couple de valeurs caractéristiques $\rho_i$, $\theta_i$, qui correspondent respectivement, en coordonnées curvilignes, à la longueur $\rho_i$ de chaque segment et à l'angle $\theta_i$, que fait ce segment par rapport à une direction de référence,

– à comparer les couples de valeurs caractéristiques obtenues respectivement, pour les segments du contour à reconnaître et du contour de référence, caractérisé en ce que la comparaison consiste à rechercher, à partir de ces couples, des coïncidences entre des gros segments caractéristiques correspondants du contour de référence et du contour à reconnaître, un gros segment résultant d'un contour étant un segment qui peut s'inscrire dans un rectangle de dimensions limites $\Delta\rho_s$, $\Delta\theta_s$, un gros segment pour lequel $\Delta\rho_s$ est bien plus grand que $\Delta\theta_s$ étant caractéristique rectiligne du contour ($\Delta\rho_s$ est localement la plus grande longueur d'un segment, compatible avec un écart d'angle $\Delta\theta_s$) un gros segment pour lequel $\Delta\theta_s$ est bien plus grand que $\Delta\rho_s$ étant dit caractéristique de variation d'angle du contour ($\Delta\theta_s$ est localement le plus grand écart d'angle compatible avec une longueur de segment $\Delta\rho_s$), un gros segment A du contour de référence étant en coïncidence avec un gros segment B du contour à reconnaître, pour un décalage ($\rho_0$, $\theta_0$), si en faisant coïncider l'origine du repère définissant A, avec le point ($\rho_0$, $\theta_0$) dans le repère définissant B, les propriétés suivantes sont vérifiées, en coordonnées curvilignes:

$$\rho_A - \rho_B - \rho_0 < \Delta\rho_1$$

$$\theta_A - \theta_B - \theta_0 < \Delta\theta_1$$

$\Delta\rho_1$ et $\Delta\theta_1$ étant fixées.

2. Procédé selon la revendication 1, caractérisé en ce que la recherche des coïncidences consiste en outre dans des images développées (DL$_1$, DL$_2$) à partir de segments respectifs des deux lignes de contours de l'image de référence et de l'image à reconnaître, dans un repère ($\rho$, $\theta$) à ramener l'image développée inconnue DL$_2$ à une longueur égale à la longueur de l'image développée de référence DL$_1$ par une homotétie sur sa développée de rapport $\dfrac{L_1}{L_2}$, à rechercher les moyennes ($\theta_m$) des valeurs angulaires, respectives des segments de ces deux lignes, puis à centrer ces valeurs moyennes sur une valeur commune ($\theta_0$), puis, pour ces deux images ainsi centrées autour de la valeur moyenne ($\theta_0$) et présentant alors toutes les deux une même longueur (L1), à déterminer l'aire (A) qui sépare ces deux images, la comparaison de cette aire avec un seuil permettant d'affirmer, lorsqu'elle est inférieure à ce seuil, que l'image à reconnaître correspond à l'image de référence.

## Claims

1. Process for the automatic recognition of an image (I) on the basis of a corresponding reference image and, consisting for each of these images:

– obtaining by optoelectronic detection means (C), analog signals whose amplitudes respectively depend on the intensity levels of the light rays from the image,

– digitizing the values of the amplitudes of the analog signals, the digital values obtained being recorded in a memory (M),

– determining, by means of a processing unit (UT) receiving the stored digital values of the amplitudes, digital values corresponding to the coordinates of the points of at least one contour line (L) characterizing the image in a reference line (XY), the values of these coordinates then being stored,

– coding by means of the reference unit (UT) receiving the digital values of the coordinates of the points of the contour line (L), successive segments (Si), whose ends are located on said line, said codes being then stored at the same time as the digital values of the coordinates of the ends of the corresponding segments,

– obtaining, for each segment of the contour to be recognised and the reference contour and on the basis of coded values of the segments (Si) and coordinates of their ends, a pair of characteristic values $\rho_i$, $\theta_i$, which respectively correspond in curvilinear coordinates the the length $\rho_i$ of each segment and to the angle $\theta_i$ formed by said segment with a reference direction,

– comparing the pairs of characteristic values obtained respectively for the segments of the contour to be recognised and the reference contour, characterized in that the comparison consists of investigating, on the basis of these pairs, coincidences between large corresponding characteristic segments of the reference contour and the contour to be recognised, a large segment resulting from a contour being a segment which can be inscribed in a rectangle of limiting dimensions $\Delta\rho_s$, $\Delta\theta_s$, a large segment for which $\Delta\rho_s$ is larger than $\Delta\theta_s$ said to be a rectilinear characteristic of the contour ($\Delta\rho_s$ is locally the greatest length of a segment which is compatible with an angular variation $\Delta\theta_s$), a large segment for which $\Delta\theta_s$ is larger than $\Delta\rho_s$ being called the angle variation characteristic of the contour ($\Delta\theta_s$ being locally the greatest angular variation compatible with a segment length $\Delta\rho_s$), a large segment A of the reference contour coinciding with a large segment B of the contour coinciding with a large segment B of the contour to be recognised for a displacement ($\rho_0$, $\theta_0$), if by making coincide the origin of the reference defining A and the point ($\rho_0$, $\theta_0$) in the reference defining B, the following properties are proved in curvilinear coordinates

$$\rho_A - \rho_B - \rho_0 < \Delta\rho_1$$

$\Delta\rho_1$ and $\Delta\theta_1$ being fixed.

$$\theta_A - \theta_B - \theta_0 < \Delta\theta_1$$

2. Process according the claim 1, characterized in that the investigation of the concidences also consists in the developed images (DL1, DL2) on the basis of the respective segments of the two contour lines of the reference image and the image to be recognised in a reference ($\rho$, $\theta$) of bringing the unknown developed image DL$_2$ to a length equal to the length of the developed reference image DL$_1$ by a homothetic transformation of its evolute of ratio $\dfrac{L_1}{L_2}$ and then, for these two images centered around the mean value ($\theta_0$) and both having the same length (L$_1$) determining the area (A) separating the said two images, the comparison of this area with a threshold making it possible to affirm, when it is below said threshold, that the image to be recognised corresponds to the reference image.

**Patentansprüche**

1. Verfahren zum automatischen Erkennen eines Bildes (I) aufgrund eines entsprechenden Bezugsbildes, welches für jedes dieser Bilder darin besteht:
– dank optoelektronischer Erfassungsmittel (C) analoge Signale zu erhalten, deren Amplituden jeweils von dem Intensitätspegel der von dem Bild ausgesandten Lichtstrahlen abhängen,
– die Amplitudenwerte der analogen Signale zu digitalisieren, wobei die erhaltenen digitalen Werte in einem Speicher (M) gespeichert werden,
– dank einer Verarbeitungseinheit (UT), die die digitalisierten, gespeicherten Werte der Amplituden erhält, digitale Werte zu bestimmen, die den Koordinaten von Punkten wenigstens einer charakteristischen Umrandungslinie (L) des Bildes in einem Kennzeichnungssystem (X, Y) entsprechen, wobei die Werte dieser Koordinaten dann gespeichert werden,
– dank der Verarbeitungseinheit (UT), die die digitalen Werte der Koordinaten der Punkte der Umrandungslinie (L) erhält, aufeinanderfolgende Abschnitte zu kodieren, deren Enden sich auf dieser Linie befinden, wobei diese Kode dann zur gleichen Zeit wie die digitalen Werte der Koordinaten der Enden der entsprechenden Abschnitte gespeichert werden,
– für jeden Abschnitt der zu erkennenden Umrandung und der Bezugsumrandung und aufgrund der kodierten Werte der Abschnitte (Si) und der Koordinaten ihrer Enden ein Paar von charakteristischen Werten $\rho_i$, $\theta_i$ zu erhalten, die jeweils bei Polarkoordinaten der Länge $\theta_i$ von jedem Abschnitt und dem Winkel $\rho_i$ entsprechen, den dieser Abschnitt in bezug auf eine Bezugsebene aufweist,
– die Paare von charakteristischen Werten, die jeweils für die Abschnitte der zu erkennenden Umrandung und der Bezugsumrandung erhalten werden, zu vergleichen, dadurch gekennzeichnet, dass der Vergleich darin besteht, aufgrund dieser Paare Übereinstimmungen zwischen entsprechenden grossen, charakteristischen Abschnitten der Bezugsumrandung und der zu erkennenden Umrandung zu suchen, wobei ein sich bei einer Umrandung ergebender, grosser Abschnitt ein Abschnitt ist, der in ein Rechteck mit Grenzabmessungen $\Delta\rho_s$, $\Delta\theta_s$ eingeschrieben werden kann, ein grosser Abschnitt, bei dem $\Delta\rho_s$ viel grösser als $\Delta\theta_s$ ist, geradliniges Merkmal der Umrandung genannt wird ($\Delta\rho_s$ ist örtlich die grösste Länge eines Abschnitts, die mit einer Winkelabweichung $\Delta\theta_s$ verträglich ist), ein grosser Abschnitt, bei dem $\Delta\theta_s$ viel grösser als $\Delta\rho_s$ ist, Merkmal der Winkeländerung der Umrandung genannt wird ($\Delta\theta_s$ ist örtlich die grösste Winkelabweichung, die mit einer Länge des Abschnitts $\Delta\rho_s$ verträglich ist), ein grosser Abschnitt A der Bezugsumrandung mit einem grossen Abschnitt B der zu erkennenden Umrandung bei einer Versetzung ($\rho_0$, $\theta_0$) in Übereinstimmung ist, wenn, indem der Ursprung des A festlegenden Kennzeichnungssystem mit dem Punkt ($\rho_0$, $\theta_0$) in dem B festlegenden Kennzeichnungssystem zur Übereinstimmung gebracht wird, die folgenden Eigenschaften in Polarkoordinanten gelten:

$$\rho_A - \rho_B - \rho_0 < \Delta\rho_1$$

$$\theta_A - \theta_B - \theta_0 < \Delta\theta_1$$

wobei $\Delta\rho_1$ und $\Delta\theta_1$ fest sind.

2. Verfahren nach Anspruch 1, dadurch gekennzeichnet, dass das Aufsuchen der Übereinstimmungen ferner darin besteht, bei den entwickelten Bildern (DL1, DL2) aufgrund der jeweiligen Abschnitte der Umrandungslinien des Bezugsbildes und des zu erkennenden Bildes in einem Kennzeichnungssystem ($\rho$, 0) das entwickelte, unbekannte Bild DL2 auf eine Länge, die gleich der Länge des entwickelten Bezugsbildes DL1 ist, durch eine Ähnlichkeitstransformation bei seiner Evolute mit dem Verhältnis L1/L2 zurückzuführen, die Mittel ($\theta_m$) der jeweiligen Winkelwerte der Abschnitte dieser zwei Linien zu suchen, dann diese mittleren Werte auf einem gemeinsamen Wert ($\theta_0$) zu zentrieren, daraufhin diese zwei derart um den Mittelwert ($\theta_0$) zentrierten und dann bei dieselbe Länge (L1) aufweisenden Bilder die Fläche (A) zu bestimmen, die diese zwei Bilder trennt, wobei ein Vergleich dieser Fläche mit einem vorbestimmten Schwellenwert ermöglicht, festzulegen, dass, wenn jene kleiner als dieser Schwellenwert ist, das zu erkennende Bild dem Bezugsbild entspricht.

# FIG.1

# FIG.2

# FIG.3

# FIG.4

# FIG.5

# FIG.6

# FIG.7

FIG.8

FIG.9

FIG.10

FIG.11

FIG.12

FIG.13